# EUROPEAN PATENT APPLICATION

(11) **EP 4 382 297 A1**
(43) Date of publication of application: **12.06.2024**
(21) Application number: 22212662.5
(22) Date of filing: 09.12.2022
(51) Int. Cl.: B32B 43/00

(54) **SEPARATING COVER WINDOW FROM DISPLAY**

(71) Applicant: Rebel Technology Labs Ltd, London EC2V 6DN (GB)
(72) Inventor: DE SANTIS, Jack, London, EC2V 6DN (GB); JACOBS, Charl, London, EC2V 6DN (GB)
(74) Representative: Marks & Clerk LLP

(57) **Abstract**

A method for separating a cover window from a display, wherein the display comprises a layer of optically clear adhesive bonding the cover window to the remainder of the display. The method comprises capturing an image of a face of the display, the face of the display comprising the cover window; determining a portion of the face of the display based on the captured image; and shining the laser at the face of the display and displacing at least one of the display and a beam of the laser relative to the other such that a point where the beam of the laser is incident upon the display traverses the determined portion of the face of the display.

## Description

### FIELD OF THE INVENTION

Embodiments described herein relate to methods and systems for removing a cover window from a display.

### BACKGROUND TO THE INVENTION

Modern electronic visual displays typically comprise stacks of functional layers that often include a transparent outermost cover, such as a pane of tempered glass, for protecting the other layers. Such covers define the exterior of their displays and are therefore particularly liable to being scratched, cracked, or otherwise damaged in use, and may often be damaged without the remaining functionality of the display (which may be provided by deeper layers) being negatively affected. Such damage is particularly common on the covers of smartphone displays. Displays damaged in this may be repaired by removing and replacing their covers.

Such covers are typically bonded to the remaining layers using an optically clear adhesive (OCA). Performing an effective repair requires undoing such an optically clear adhesive without damaging the remaining components of the display beneath the outer cover layer.

Existing methods for removing damaged outer layers of typically involve inserting a narrow implement beneath the display's cover and/or heating the display to weaken the optically clear adhesive. For example, existing methods of removing cover layers from active matrix organic light emitting diode (AMOLED) smartphone displays typically involve inserting a narrow heated wire behind the cover glass to separate it from the remainder of the display. However, such methods pose a significant risk of damaging layers of the display behind the cover layer being removed. In particular, touchscreen light emitting diode (LED) displays are very easy to damage by applying force to the functional layers behind the cover layer being removed.

An aim of the invention is to provide improved means for reliably removing covers from electronic visual displays, in particular smartphone displays, without damaging other functional layers of the displays.

### SUMMARY OF THE INVENTION

According to a first aspect of the invention there is provided a method for separating a cover window from a display, wherein the display comprises a layer of optically clear adhesive bonding the cover window to the remainder of the display, the method comprising: capturing an image of a face of the display, the face of the display comprising the cover window; determining a portion of the face of the display based on the captured image; and shining a laser at the face of the display and displacing at least one of the display and a beam relative to the other such that a point where the beam of the laser is incident upon the display traverses the determined portion of the face of the display.

In some embodiments, the laser has a wavelength between 300 nanometers and 400 nanometers.

In some embodiments, the laser may be shone at the face of the display with a focal plane behind the surface of the display.

In some embodiments, the method may further comprise the depth of the focal plane based on a depth of the layer of optically clear adhesive within the display and/or based on a depth of an inner surface of the cover window at which the cover window meets the layer of optically clear adhesive.

In some embodiments, the method may further comprise: shining light source into the display; varying a focal depth of the light source; identifying a focal depth of the light source at which the display fluoresces; and determining based on the identified focal depth, the depth of the optically clear adhesive within the display and/or the depth of an inner surface of the cover window at which it meets the optically clear adhesive within the display.

In some embodiments, the method may further comprise identifying at which the display fluoresces and determining a property of the optically clear adhesive based on the identified wavelength.

In some embodiments, the determined portion of the face of the display to is determined such that it excludes parts of the display where cover window is missing and/or is cracked.

In some embodiments, determining the portion of the face of the display comprises a determining a path with which the laser transverses the display.

In some embodiments, the beam of the laser is displaced relative to the display using a mirror galvanometer arrangement.

In some embodiments, the method further comprises inserting an implement between the cover window and the remainder of the display after the point where the beam of the laser is incident upon the display traverses the determined portion of the face of the display.

In some embodiments, at least one of: a focal depth of the laser, a beam width of the laser, a speed with which the beam of the laser traverses the determined portion of the face of the display, a power of the laser, and/or a number of times that laser traverses each over each point in the determined portion of the display; is dependent upon at least one of: a thickness of the cover window, a thickness of the layer of optically clear adhesive bonding the cover window 110 to the remainder of the display, a type of the optically clear adhesive, and/or a position of one or more other layers within the display

According to a second aspect of the invention, there is provided a system for separating a cover window from a display, wherein the display comprises a layer of optically clear adhesive bonding the cover window to the remainder of the display, the system comprising: a mount for the display; an imaging device for capturing an image of a face of the display, the face of the display comprising the cover window; a laser emitter arranged to shine at the mount; means for displacing at least one of a display on the mount and a beam emitted from the laser emitter relative to the other; and a controller configured to determine a portion of the face of a display to with a laser based on an image captured of the display by the imaging device; and to shine the laser at the face of the display and displace at least one of the display and the beam emitted from the laser source relative to the other such that a point where the beam of the laser is incident upon the display traverses the determined portion of the face of the display.

In some embodiments, the laser emitter is configured to emit a laser a wavelength between 300 nanometers and 400 nanometers.

The controller of the system may be configured to perform any of the optional method features described above.

According to a third aspect of the invention, there is provided a storage medium comprising computer instructions executable by a processor, the computer instructions when executed by a processor causing the processor to perform a method as described above.

### BRIEF DESCRIPTION OF THE FIGURES

Fig. 1a shows an exploded cross-sectional view of an example of a display;
Fig. 1b shows an exploded cross-sectional view of an example of an AMOLED smartphone display;
Fig. 2 is a flowchart showing a method of de-bonding a cover window from a display;
Fig. 3 is a flowchart showing a method of determining a depth of the inner surface of the cover window of a display;
Fig. 4 shows an example of a laser apparatus for de-bonding a cover window from a display; and
Fig. 5 shows an example of an apparatus for of determining a depth of the inner surface of the cover window of a display.

### DETAILED DESCRIPTION OF THE FIGURES

Embodiments described herein relate to methods and systems for de-bonding cover windows from electronic visual displays, such as touchscreen displays, using a laser to heat and undo an optically clear adhesive binding the cover window the remainder of the display.

Such methods may be used to remove damaged cover windows from displays in which they cover other comparatively fragile components such as touch sensors, without damaging said covered components.

Displays from which the cover windows are removed using embodiments described herein may each comprise such an outer cover window, one or more deeper layers, and an optically clear adhesive bonding the outer cover layer to the one or more deeper layers. The displays may be touchscreen displays, light emitting diode (LED) displays, organic LED (OLED) displays, active-matrix OLED (AMOLED) displays, liquid crystal displays (LCDs) and/or any other suitable displays. The cover window may be formed of and/or may comprise glass or any other transparent material. The one or more deeper layers may comprise a substrate, a touch sensor, a polarizer, a thin-film transistor (TFT) layer, spacers, electrodes, a backlight, and/or an emitting layer. The optically clear adhesive (OCA) may be a liquid optically clear adhesive, an optically clear adhesive glue, optically clear resin, and/or an ultraviolet light cured optically clear adhesive.

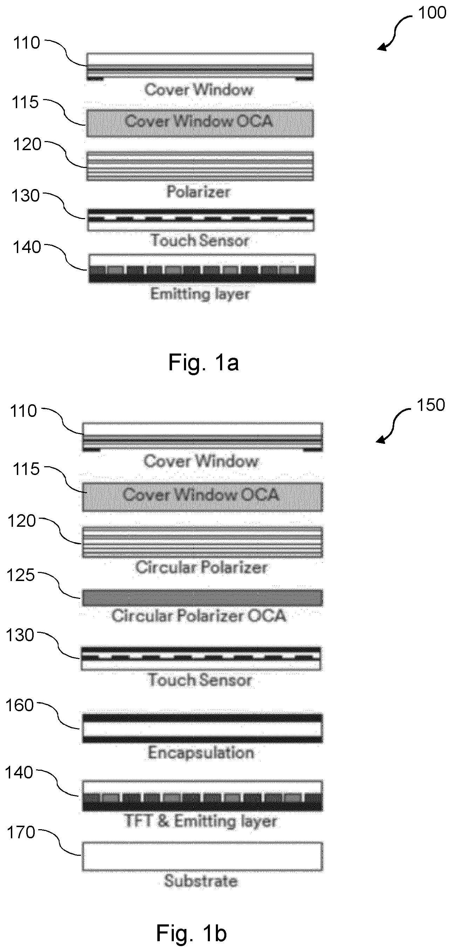

Fig. 1 shows an exploded cross-sectional diagram of an example of a touchscreen display 100 comprising a cover window 110 which is replaceable using embodiments described herein. The display has a plurality of stacked layers, comprising a glass pane cover window 110, a polarizer 120, a touch sensor or digitizer 130, and an emitting layer 140 such as an LCD or OLED panel.

Additionally, the display comprises a cover window optically clear adhesive (OCA) layer 115 between the cover window 110 and the circular polarizer 120, for bonding the cover window 110 to said circular polarizer 120 (and by extension, to the remainder of the display 100).

Fig. 1b shows an example of a touchscreen AMOLED smartphone display 150 whose cover window is replaceable using embodiments described herein. In the AMOLED display 150 the polarizer 120 is a circular polarizer and the emitting layer is a thin film transducer (TFT) AMOLED panel In addition to the layers described above with reference to Fig. 1a, the AMOLED display further comprises an encapsulation layer 160 between its touch sensor 130 and its AMOLED panel 140, a substrate 170 behind its AMOLED panel, and a polarizer OCA layer 125 between the circular polarizer 120 and the touch sensor 130 for bonding them together.

The illustrated displays 100, 150 are only examples, and it will be appreciated that the invention is generally applicable to displays 100 that comprise a transparent cover 100, which may be formed of glass or other transparent materials, that is bonded to the remainder of the display by an OCA layer 115 between that cover 100 and the remainder of the display 100.

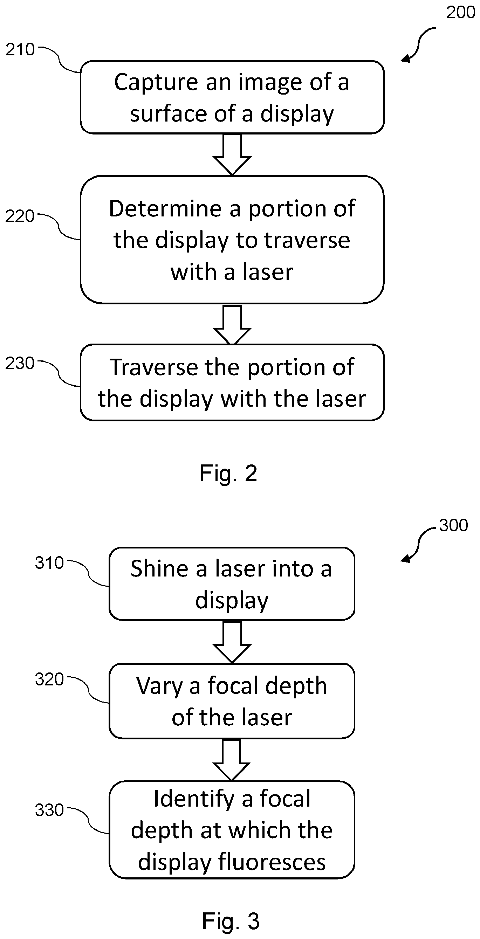

Fig. 2 is a flowchart of a method 200 of separating a cover window 110 from a display 100 that comprises a cover window 110 bonded to a remainder of the display 100 using a layer of optically clear adhesive 115. The method 200 comprises capturing 210 an image of a face of the display 100, determining 220 a portion of the face of the display 100, and shining the laser at the face of the display and displacing at least one of the display and a beam of the laser relative to the other such that a point where the beam of the laser is incident upon the display traverses the determined portion of the face of the display.

This results in light from the laser shining through the cover window 110 to heat the optically clear adhesive 115 as the beam traverses the display 100.The laser may have a wavelength between 300 and 400 nanometers. Light of such a wavelength does not significantly heat glass, such as glass of the cover window 110, through which the laser shines, but is absorbed a significant amount by optically clear adhesives 115, onto which the laser shines through the glass. Consequently, using such a laser significantly heats the optically clear adhesive 115 without significantly heating the remainder of the display 100, weakening or completely severing its bond.

In displays 100 as shown in figs. 1a and 1b, the optically clear adhesive 115 absorbs approximately 40 to 50 percent of the power of a laser shone through the glass cover window 110. The polariser 120 beneath the optically clear adhesive 115 absorbs the majority of the remaining power of the laser, preventing it from reaching the more fragile and expensive deeper layers 130, 150. In some embodiments, the focal depth, speed and/or other parameters with which the laser traverses the determined portion of the display may be selected to minimize heating of the polariser and/or a surface thereof, in order to prevent the polariser from being damaged.

Such a method may be used to repair a display 100 when its cover window 110 becomes damaged but its remaining layers remain functional, by enabling the cover 100 to be removed from the display 100 and replaced without damaging the remaining layers of the display 100, such as comparatively expensive touch sensor and/or TFT/OLED layers 130, 150 of a display.

The laser may have a power of less than 20 watts, which may prevent excess heating of the display and damage to components thereof. In some embodiments the power of the laser may be less than 15 watts, less than 10 watts, greater than 1 watt and/or greater than 3 watts. While lower wattage lasers may prevent unintended damage to the display, the lower the wattage, the longer the laser will require to de-bond the cover window 110 from the remainder of the display 100.

Existing methods of using lasers to remove damaged glass layers' from smartphones use higher wavelength and higher wattage lasers, such as 1600 nanometer wavelength 200 watt lasers. Such lasers are not suitable for removing cover glass from lasers as they would heat and damage layers of the display beneath the cover glass. Instead they are only used to remove back glass from rear non-display surfaces of smartphones.

In first step 210 of the method 200, an image of a face of the display 100 comprise and/or defined by the cover window 110 is captured, for example using an imaging device comprised by a laser system. The image may be captured after the display is positioned to be traversed by the beam of the laser, for example on a laser bed or gantry of a laser system.

In a second step 220 of the method 200 a portion of the face of the display 100 is determined based on the captured image. The determined portion of the display is the portion of the face of the display upon which the laser will be shine and which the beam of the laser will traverse in the third step 230 of the method 200. Consequently, the determined portion of the face of the display is the portion of the cover window behind which optically clear adhesive will be directly heated by the laser.

The portion of the face of display may be determined such that it excludes parts of the display where cover window is missing and/or is cracked. This may prevent the laser shining onto deeper layers of the display and damaging such layers. The determined portion of the face of the display may extend to edges of missing parts and/or cracks of the cover window 110. Alternatively, or additionally, the determined portion of the face of the display may omit parts of face which are not defined by the cover window, such as the lenses of forward facing "selfie" cameras.

Determining the portion of the face of the display 100 may comprise processing the captured image to increase contrast therein and/or performing edge detection to identify cracks in, and/or missing parts of, the cover window.

In some embodiments, the determined portion of the face of the display 100 may also be based, at least in part, on identity of display 100 or a model thereof, which may be input by a user and/or automatically detected from the captured image. For example, the portion of the face of the display 100 may be at least partially based on parts of the display known to, or not to, have optically clear adhesive behind its cover window 110.

In some embodiments, determining the portion of the face of the display 100 may comprise determining a path for the beam of the laser to traverse said portion. Such a path may comprise panning back and forth over the area and/or potions thereof. In some embodiments, the path may trace the edges of missing and/or cracked parts of the display, which may be excluded from the determined potion of the face of the display as described above. The path may be determined such that it does not scan over any cracks or missing parts of the display, and may comprise gaps or jumps during which the laser is to be deactivated in order to cross such cracks or missing parts.

In a third step 230 of the method, a laser is shone at the face of the display and at least one of the display and a beam of the laser is displaced relative to the other such that a point where the beam of the laser is incident upon the display traverses the determined portion of the face of the display.

The laser that shines through the cover window 110 onto the optically clear adhesive 115 may have a wavelength of between 300 and 400 nanometers in order to heat the optically clear adhesive 115 to a significantly greater extent than the remainder of the display.

In some embodiments, the wavelength of the laser may be greater than 325nm, greater than 340nm, less than 375nm and/or less than 360nm. For example, the laser may have a wavelength of between 343nm and 355nm.

The laser may be shone through the cover window 110 with a focal plane behind the surface of the cover window 110. The focal plane may be within the optically clear adhesive, may be at an inside surface of the cover window, and/or closer to the inside surface of the cover window than the imaged outside surface of the cover window defining the face of the display. The focal plane may be based on a measured depth of the cover window and/or optically clear adhesive, and/or a known model of display (for which the depth of the cover window and/or optically clear adhesive may be known). The focal plane may between 0.5 and 1.0mm behind the imaged surface of the cover window 110. Focusing the laser at this depth increases the energy that the laser provides to the optically clear adhesive and/or its boundary with the cover window relative to other depths of the display.

Shining the laser through the cover window 110 onto the optically clear adhesive may heat the optically clear adhesive, thereby weakening or severing the bond it forms between the cover window and the remainder of the display and/or partially or fully ablating the optically clear adhesive. Weakening or ablating the optically clear adhesive in this manner may facilitate subsequent removal of the cover window.

Additionally, or alternatively, shining the laser through the cover window 110 may partially ablate, and/or etch, the inside surface of the cover window where it meets the optically clear adhesive 115. Ablating or etching this inside surface of the cover window 110 may weaken the bond between the cover window 110 and the optically clear adhesive 115, for example by creating a dusty interface between the cover window 110 and the optically clear adhesive 115.

Additionally, or alternatively, shining the laser through the cover window 110 onto the optically clear adhesive 115 may induce a chemical reaction in the optically clear adhesive, weakening or removing the bond it provides between the cover window 110 and the remainder of the display 110. In certain scenarios, shining the laser through the cover window 110 onto the optically clear adhesive 115 has been found to de-bond the cover window without significantly heating, ablating, or etching the optically clear adhesive or the surface of the cover window, as a consequence of such chemical reactions.

The extent to which the laser partially ablates and/or etches the inside surface of the glass and to which the laser heats the optically clear adhesive may be controlled by varying parameters with which the laser is shone through the cover window, such as the focal depth of the laser, the power density of the laser, and/or the speed with which the laser transverses the determined portion of the display. These parameters may be determined or selected based on the display, a model thereof, and/or an optically clear adhesive comprised thereby, which may be input by a user and/or automatically determined.

Increasing the depth of the focal plane into the display beyond the inner surface of the cover window, decreasing power density of the laser (for example, by reducing its power and/or by increasing its beam size using a beam expander), and/or increasing the traversal speed of the laser (such that less energy is provided to each point on the display) may reduce the extent to which the inner surface of the cover window is ablated and/or etched, and/or may increase the extent to which the optically clear adhesive is heated and/or ablated.

Conversely, shifting the depth of the focal plane towards the inner surface of the cover window, increasing the power density (for example, by increasing its power and/or by reducing its beam size using a beam expander), and/or decreasing the traversal speed of the laser may increase the extent to which the inner surface of the cover window is ablated and/or etched.

The point where the beam of the laser is incident upon the display may be made to traverse the determined portion of the face of the display by moving the display with respect to a laser source, moving the laser source relative to the display, and/or by deflecting the laser beam to traverse the display, for example using a mirror galvanometer arrangement, sometimes referred to as a "galvo". The laser beam may traverse all or part of the determined portion of the display multiple times, for example in multiple directions, such as in a hatching pattern.

In some embodiments, as the beam of the laser traverses the display and heats the optically clear adhesive, a fume extractor may be used to remove gasses or fumes emitted as a consequence of heating the optically clear adhesive.

In some embodiments, after the beam of the laser has traversed the determined portion of the display, the method may further comprise removing the cover window from the display, for example by inserting an implement such as spatula or other tool beneath an edge of the display, and using it to separate the cover window from the remainder of the display. In some such embodiments, the method may further comprise removing any remaining optically clear adhesive from the layer that bonded the cover window to the remainder of the display, for example, using one or more solvents. Any powdered glass residue from ablating and/or etching the inside surface of a glass cover window as described above may be removed by or in the process of removing such remaining optically clear adhesive.

Fig. 3 is a flowchart of a method 300 for determining a depth of the inner surface of the cover window 110 of a display 100, at which it meets a layer of optically clear adhesive 115 bonding it to the remainder of the display 100. Determining such a depth may enable a depth at which to focus a laser when performing a method 200 of de-bonding the cover window 110 as described above.

The method 300 of determining the cover window depth may be performed in isolation, or may be performed as additional steps of method 200 of de-bonding the cover window 110 as described above before the step 230 of traversing the determined portion of the display with the laser. For example, the method 300 of determining the cover window depth may be performed before the step 210 of capturing an image of the display 100.

The method 300 comprises: shining 310 light into the display, varying 320 a focal depth of the light, and identifying 330 a focal depth at which the display fluoresces.

Optically clear adhesives 115 are fluorescent materials, therefore when the focal depth of the light is level with the layer of optically clear adhesive 115 bonding the cover window 110 to the remainder of the display, the display 100 fluoresces. Therefore by identifying one or more focal depths of the light at which the display 100 fluoresces, one or more corresponding depths of the display 100 at which optically clear adhesive.

Determining the depth of the optically clear adhesive 115 within the display 100 may enable a focal depth of a laser to be determined when traversing 230 a display in a method 200 of de-bonding and/or removing a cover window 100 as described above with reference to Fig. 2.

The light that is shone 310 into the display 100 when identifying the depth of the optically clear adhesive 115 may be emitted by a light emitting diode (LED) or other low-power source in comparison to a laser used to de-bond the cover window from the display in a method 200 as described above with reference to Fig. 2. For example, the light may be emitted by a 2.4 mW LED.

The light may be emitted with a wavelength similar, or identical to the light of a laser used to de-bond the cover window from the display in a method 200 as described above with reference to Fig. 2. The wavelength of the light may be within ±10nm of the wavelength of the laser, or within t5nm of the wavelength of the laser

The focal depth of the light may be varied 320 in a series of steps or continuously. The focal depth may be varied from a low depth, such as from a focal plane at the outer surface of the cover window 110 to a greater depth, such that the focal depth moves deeper into the display 100, this may allow the focal depth to be varied until it reaches the optically clear adhesive 115.

In some embodiments a minimum depth at which fluorescence occurs may be identified, such a focal depth may correspond to the depth of the inner surface of the cover window 110, where it contacts the optically clear adhesive 115. Alternatively, or additionally, a range of depths at which the display fluoresces, such a range of focal depths correspond to the range of depths in the display occupied by the optically clear adhesive layer 115 behind the cover window 110.

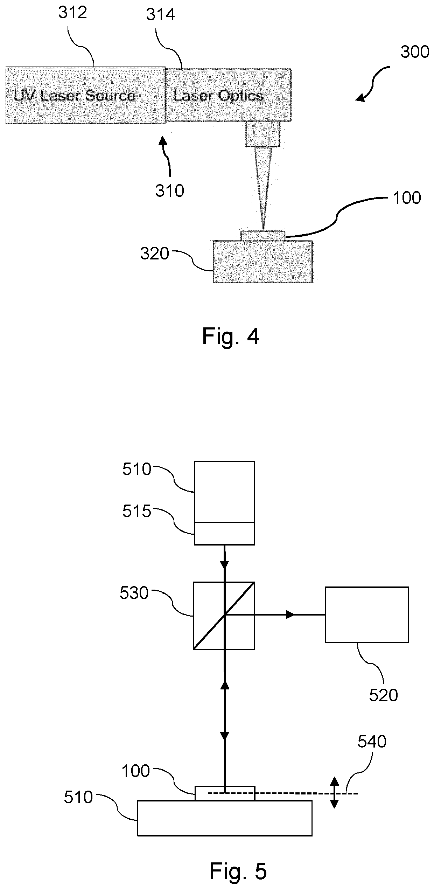

As the light is shone onto the display, light from the display (which depending upon the focal depth of the light, may include reflected light and/or excited fluorescent emissions) may be received by a spectrometer. The spectrometer may measure the wavelengths and/or frequencies of the received light and fluorescence may be detected based on a difference between a wavelength and/or frequency of the received light and a wavelength and/or frequency of the light shone into the display. In some embodiments, light from the display within a path between the light source and the display may be redirected to such spectrometer using a beam splitter, as shown in Fig. 4.

In some embodiments the optically clear adhesive may be identified based on a wavelength and/or frequency of fluorescent light emitted from the display, or based on a difference between such a wavelength and/or frequency and a wavelength and/or frequency of the laser. Such a detection may be made because different optically clear adhesives fluoresce at different wavelengths and/or frequencies, such as unique identifying wavelengths and/or frequencies.

Fig. 4 shows an example of a laser system 400 for de-bonding or removing a cover window 110 from a display 100 by performing a method 200 as described above. The system 400 comprises an ultraviolet laser 410 and a mount 420 for the display 100. The laser 410 comprises a laser source 412, such as a diode-pumped solid state ultraviolet laser, arranged to output a laser, and laser optics elements 414 arranged to adjust and/or steer the laser output by the laser source 412.

In some embodiments, the laser system 400 may further comprise a controller, a frame, a housing, a fume extractor, and or a cooling and filtering unit. Such a controller may control the system 400 to perform a method 200 as described above. The controller may comprise a processor, and a memory comprising computer instructions, that when executed by the processor, cause the method 200 to be performed.

In some embodiments, the mount 420 may be a gantry configured to displace the display mounted thereon in one or more directions, for example, such that a beam emitted by the laser 410 traverses the surface of the display 100 as described above. For example, the mount 420 may be an XYZ gantry. Alternatively, or additionally, the system 400 may comprise means for displacing the laser 410 relative the mount 420 and the display thereon, and/or the laser optics 414 may be configured to redirect the laser, for example using a laser galvanometer scanner comprised thereby.

The laser optics elements 414 may comprise a beam expander, (such as a 1:10x or 1:5x beam expander), a beam scanner (such as a galvanometer), and/or one or more lenses (such as a 330mm lens). The laser optics elements, such as one or more lenses thereof, may be configured to vary the focus depth of the laser in use. The beam expander may enable the beam width of the laser incident upon the display 100 to be varied, thereby varying the power density of the laser incident upon the display 100.

In a specific example, the laser system 400 comprises an ultraviolet diode pumped solid state laser configured to emit a 355 nanometer wavelength at 6 watts (as measured at the mount 420).

One or more parameters with which a beam of a laser of a system 400 as described above, and/or a beam of a laser used in a method 200 as described above, traverses across a determined portion of a face of a display 100 may vary according to the manner in which the cover window 110 is to be de-bonded from the remainder of the display, and/or upon properties of the display 100, the cover window 110, and/or the optically clear adhesive 115 thereof.

For example, the one or more parameters may vary according to a thickness of the cover window 110, a thickness of the layer of optically clear adhesive 115 bonding the cover window 110 to the remainder of the display, a type of the optically clear adhesive, and/or the position of one or more other layers, such as touch panel 140 or a polarizer 130 within the display 100.

The one or more parameters that are varied may comprise the focal depth of the laser, a focus spot size or beam width of the laser, a speed with which the beam of the laser traverses the determined portion of the face of the display, a power of the laser (which may be determined by a current and/or by a frequency with which the laser is pulsed) and/or a number of times that laser traverses each over each point in the determined portion of the display (which may be given by a number of passes that the beam of the laser makes over the determined portion of the face of the display).

Such parameters may determine the energy density that the laser provides to the determined portion of the face of the display (or specifically to the optically clear adhesive layer beneath it) in the course of the beam traversing the identified portion. Additionally, the one or more varied parameters may include the focal depth of the laser, which may determine the relative extents to which the optically clear adhesive 115 and its boundary with the cover window 110 are heated.

For example, if a display is known or determined to comprise layer of comparatively strong optically clear adhesive (for example, based on a wavelength at which the display fluoresces), a laser with a comparatively small focus size (i.e. a small beam diameter) and a slow traversal speed may be used. Such parameters may provide a larger amount of energy to each point of the determined portion of the display, thereby ablating the optically clear adhesive to a greater degree. Ablating the optically clear adhesive to this degree may require damaging a polarizer layer directly beneath the layer of optically clear adhesive, in which case the polarizer layer may replaced. The polarizer is a relatively cheap component (in comparison to touch sensing or light emitting layers).

In contrast, if a display is known or determined to comprise layer of comparatively weak optically clear adhesive, a focal depth may be used such that the optically clear adhesive is separated from the focal point of the laser (resulting in a larger spot size diameter at the optically clear adhesive) and/or a lower power setting (for example, resulting from a higher pulse frequency) may be used. This may reduce or avoid any risk of damaging the polarizer and/or touch sensor.

Fig. 5 shows an example of a system for determining a depth of the inner surface of the cover window 110 of a display 100 using a method 300 as described above. The system comprises a mount 510 for a display 500, a light source 520, such as an LED, for shining light onto the display 100; optics elements 515 configured to vary a focal depth 540 of the light; a spectrometer 520; and a beam splitter 530 configured to allow light from the source 510 to reach the display but to redirect light from the display 100 in the path of the light from the source 520 to the spectrometer 520.

The system may further comprise a controller. Such a controller may control the system 500 to perform a method 300 as described above. The controller may comprise a processor, and a memory comprising computer instructions, that when executed by the processor, cause the method 300 to be performed.

A system 500 for determining a depth of the inner surface of the cover window 110 of a display 100, such as a system as shown in Fig. 5 may be an independent or standalone apparatus. Alternatively, such a system may be combined or integrated with a system 400 for de-bonding or removing a cover window 110 from a display as described above with reference to Fig. 4. In such examples a single mount 420, 510 may be used, the laser elements of both elements may be in-line with each other, and/or parameters with which the a cover-window-separating laser traverses the display 100 may be automatically derived from one or more measurement obtained by the system for determining a depth of the inner surface of the cover window 110.

It will be appreciated that the invention has been described by way of example only, and that variation may be made to the embodiments described above, without departing from the scope of the invention defined by the claims.

## Claims

1. A method for separating a cover window from a display, wherein the display comprises a layer of optically clear adhesive bonding the cover window to a remainder of the display, the method comprising:
capturing an image of a face of the display, the face of the display comprising the cover window;
determining a portion of the face of the display based on the captured image; and
shining the laser at the face of the display and displacing at least one of the display and a beam of the laser relative to the other such that a point where the beam of the laser is incident upon the display traverses the determined portion of the face of the display.

2. A method according to claim 1 wherein the laser has a wavelength between 300 nanometers and 400 nanometers.

3. A method according to claim 1 or claim 2 wherein the laser is shone at the face of the display with a focal plane behind the surface of the display.

4. A method according to claim 3 further comprising determining the depth of the focal plane based on a depth of the layer of optically clear adhesive within the display and/or based on a depth of an inner surface of the cover window at which the cover window meets the layer of optically clear adhesive.

5. A method according to claim 4 further comprising:
shining light source into the display;
varying a focal depth of the light source;
identifying a focal depth of the light source at which the display fluoresces; and
determining, based on the identified focal depth, the depth of the optically clear adhesive within the display and/or the depth of an inner surface of the cover window at which it meets the optically clear adhesive within the display.

6. A method according to claim 5 further comprising identifying a wavelength at which the display fluoresces and determining a property of the optically clear adhesive based on the identified wavelength.

7. A method according to any preceding claim wherein the determined portion of the face of the display to is determined such that it excludes parts of the display where cover window is missing and/or is cracked.

8. A method according to any preceding claim wherein determining the portion of the face of the display comprises a determining a path with which the laser transverses the display.

9. A method according to any preceding claim wherein the beam of the laser is displaced relative to the display using a mirror galvanometer arrangement.

10. A method according to any preceding claim further comprising inserting an implement between the cover window and the remainder of the display after the point where the beam of the laser is incident upon the display traverses the determined portion of the face of the display.

11. A method according to any preceding claim, wherein at least one of: a focal depth of the laser, a beam width of the laser, a speed with which the beam of the laser traverses the determined portion of the face of the display, a power of the laser, and/or a number of times that laser traverses each over each point in the determined portion of the display;
is dependent upon at least one of: a thickness of the cover window, a thickness of the layer of optically clear adhesive bonding the cover window 110 to the remainder of the display, a type of the optically clear adhesive, and/or a position of one or more other layers within the display.

12. A system for separating a cover window from a display, wherein the display comprises a layer of optically clear adhesive bonding the cover window to a remainder of the display, the system comprising:
a mount for the display;
an imaging device for capturing an image of a face of the display, the face of the display comprising the cover window;
a laser emitter arranged to shine at the mount;
means for displacing at least one of a display on the mount and a beam emitted from the laser emitter relative to the other; and
a controller configured to determine a portion of the face of a display to with a laser based on an image captured of the display by the imaging device; and to shine the laser at the face of the display and displace at least one of the display and the beam emitted from the laser source relative to the other such that a point where the beam of the laser is incident upon the display traverses the determined portion of the face of the display.

13. A system according to claim 12 wherein the laser emitter is configured to emit a laser a wavelength between 300 nanometers and 400 nanometers.

14. A storage medium comprising computer instructions executable by a processor, the computer instructions when executed by a processor causing the processor to perform a method according to any of claims 1 to 10.
